Europäisches Patentamt

European Patent Office

Office européen des brevets

(11) Publication number: **0 180 555**
A2

# EUROPEAN PATENT APPLICATION

(21) Application number: **85830271.4**

(22) Date of filing: **28.10.85**

(51) Int. Cl.⁴: **F 16 D 65/02**

(30) Priority: **29.10.84 IT 5397684 U**
**07.12.84 IT 5413684 U**

(43) Date of publication of application: **07.05.86**
**Bulletin 86/19**

(84) Designated Contracting States: **DE FR GB IT NL**

(71) Applicant: **METAL-FREN SOCIETA' ITALIANA LAVORAZIONE MATERIALE D'ATTRITO di Ing. Bruno e Antonio DONETTI S.n.c., Corso Moncenisio 23, I-10090 Rosta (Torino) (IT)**

(72) Inventor: **Donetti, Bruno, Corso Telesio 68, I-10146 Torino (IT)**
Inventor: **Donetti, Antonio, Corso Moncenisio 23, I-10090 Rosta Torino (IT)**

(74) Representative: **Jacobacci, Filippo et al, c/o JACOBACCI-CASETTA & PERANI S.n.c. Via Alfieri, 17, I-10121 Torino (IT)**

(54) **Friction pad assembly for motor vehicle brakes.**

(57) A friction pad assembly for vehicle disc brakes comprises a backing plate (1), a pad (3) of friction material fixed to the backing plate (2), and at least one hold-down spring comprising two sprung arms (8) extending outwardly from an attachment part (4, 5, 6, 7) shaped so as to engage a central zone of the backing plate (1) solely in correspondence with the front and rear faces of the plate and at least one horizontal face of the plate (1) which is perpendicular to the said front and rear faces.

- 1 -

## Friction pad assembly for motor vehicle brakes

The present invention relates to a friction pad assembly for vehicle disc brakes, of the type comprising a backing plate, a pad of friction material fixed to the backing plate, and hold-down spring means formed from wire and supported centrally by the backing plate, the spring means including two sprung arms extending outwardly from an attachment part for releasably connecting the spring means to the backing plate.

The term "hold-down spring" is intended to mean a spring arranged to bias a backing plate against the guides with which the disc brake is provided so that the pad can slide towards and away from the disc during use of the vehicle. Since there is normally a clearance between the guides and the pad, the purpose of the spring is to avoid rattling of the pad relative to the guides and the noise resulting from such rattling.

From published European patent application no. 153,280 in the name of the Applicants a friction pad assembly of the type specified above is known in which the attachment part of the hold-down spring means has an open configuration and partially surrounds a central projection of the backing plate by means of a coupling of a form such as to prevent relative movements between the attachment part and the backing plate during use.

In the embodiments illustrated in this prior application, the attachment part of the spring means is substantially C-shaped and lies mainly in a horizontal plane. This attachment part in fact includes two straight horizontal lateral portions adjacent the lesser faces of the central projection and connected together at one end by a non-rectilinear portion adjacent one of the main faces of the central projection, each of these lateral portions being connected at its other end to a short portion adjacent the other main face of the projection, from which extends one of the two sprung arms. This known structure of the attachment part of the spring means is of limited use in that it allows the spring means to be applied solely to metal backing plates which have a central projection. Furthermore, the two straight sides of the attachment part adjacent the lesser faces of the central projection have a size which, although small, may constitute a problem in the fitting of the friction pad assembly to certain types of disc brakes.

The object of the present invention is to provide a friction pad assembly of the type specified above, in which the hold-down spring means can be attached both to metal plates with central projections and to metal plates without such projections and which, in the first case, do not obstruct the lesser faces of these projections with their attachment parts.

In order to achieve this object, the present invention provides a friction pad assembly for motor vehicle disc brakes, of the type specified at the beginning, the main characteristic of which lies in the fact that the attachment part of the spring means is shaped so as to engage a central zone of the upper edge of the metal plate solely in correspondence with the front and rear faces of the plate and at least one horizontal face of the plate which is perpendicular to the front and rear faces.

0180555

- 3 -

Preferably, the attachment part of the spring means comprises:

- two open structures which are parallel to each other and are each constituted by at least three mutually-perpendicular straight portions lying in a vertical plane, the straight end portions being directed vertically and engaging the main faces of the metal plate and the intermediate portions engaging the horizontal face or faces of the plate, and

- a cross member connecting a first end of each structure to the corresponding first end of the other structure and bearing on one of the main faces of the backing plate.

The two sprung arms extend outwardly from the second ends of the two structures and are partly adjacent one of the main faces of the backing plate.

Further characteristics and advantages of the invention will become apparent from the description which follows with reference to the appended drawings provided purely by way of non-limiting example, in which:

Figure 1 is a partial pespective view of a friction pad provided with a spring according to the invention,

Figure 2 is a cross-section taken on the line II-II of Figure 1,

Figure 3 is a detail of the metal plate of the pad illustrated in Figure 1,

Figure 4 is a section taken on the line IV-IV of Figure 3,

- 4 -

Figure 5 is a variant of Figure 3,

Figure 6 is a section taken on the line VI-VI of Figure 5,

Figure 7 illustrates a variant of Figure 1,

Figure 8 is a section taken on the line VIII-VIII of Figure 7,

Figure 9 is a detail of the metal plate used in the pad of Figure 7,

Figure 10 is a section taken on the line X-X of Figure 9,

Figure 11 is a variant of Figure 9,

Figure 12 is a section taken on the line XII-XII of Figure 11,

Figure 13 illustrates a further variant of Figure 1,

Figure 14 is a section taken on the line XIV-XIV of Figure 13,

Figure 15 is a variant of the metal plate illustrated in Figures 13 and 14,

Figure 16 illustrates a further embodiment of the friction pad,

Figure 17 is a section taken on the line XVII-XVII of Figure 16,

Figure 18 is a partial perspective view of a further variant of the friction pad assembly according to the present invention,

Figure 19 is a detail of Figure 18 on an enlarged scale, without the spring,

Figure 20 is a section taken on the line XX-XX of Figure 18,

Figure 21 is a variant of Figure 20,

Figure 22 is a view in the direction of arrow F in Figure 21, and

Figures 23 and 24 are two sections similar to Figure 20 of two further variants.

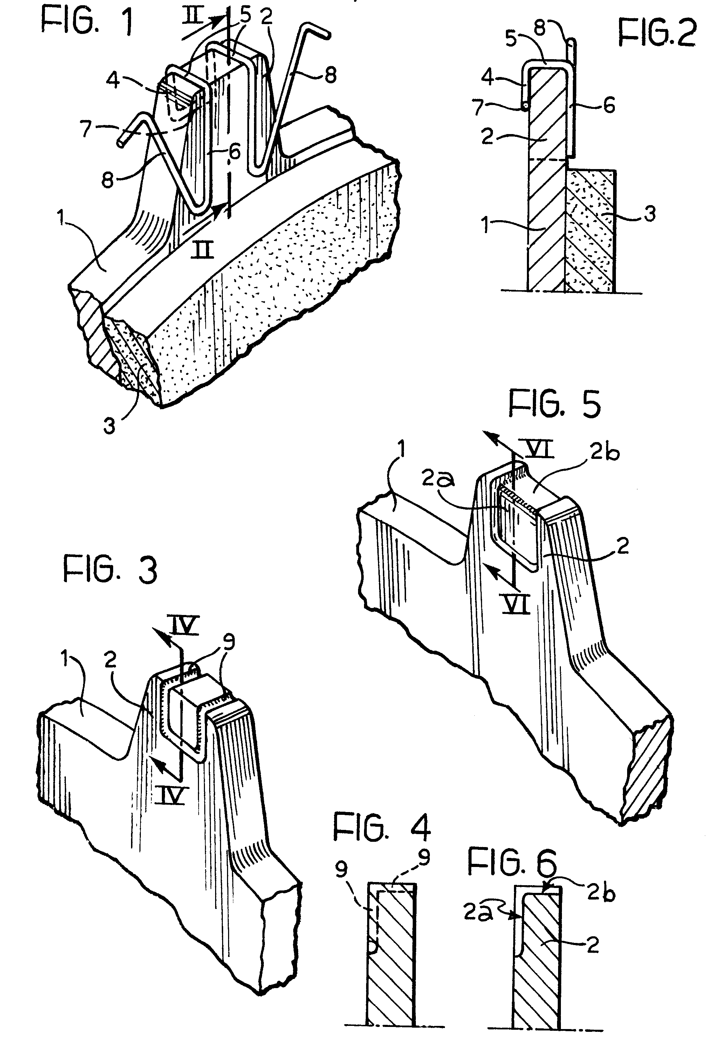

In the embodiment of Figures 1 and 2, a friction pad assembly for motor vehicle disc brakes includes a metal backing plate 1 having a central projection 2 and provided with a pad 3 of friction material on its front face.

A hold-down spring is attached by form coupling to the projection 2 and is formed from wire with an attachment part in the form of an asymmetric saddle which engages only the two main faces and the upper face of the projection 2 whereby it does not obstruct the two lesser lateral faces of the projection.

The attachment part comprises two C-shaped open structures which are parallel to each other and are each constituted by three mutually-perpendicular

- 6 -

straight portions 4, 5, 6 lying in a vertical plane, the straight end portions 4, 6 being vertical, and a cross member 7 which interconnects the ends of the two straight portions 4 and bears on the rear face of the projection 2.

Two sprung arms 8 extend outwardly from the ends of the two straight portions 6 and are partly adjacent the front face of the projection 2.

In order to locate the spring, the projection 2 has grooves 9 formed in its upper face and its rear face, as illustrated in Figures 3 and 4. These grooves also prevent the spring from projecting from the rear face of the metal plate 1.

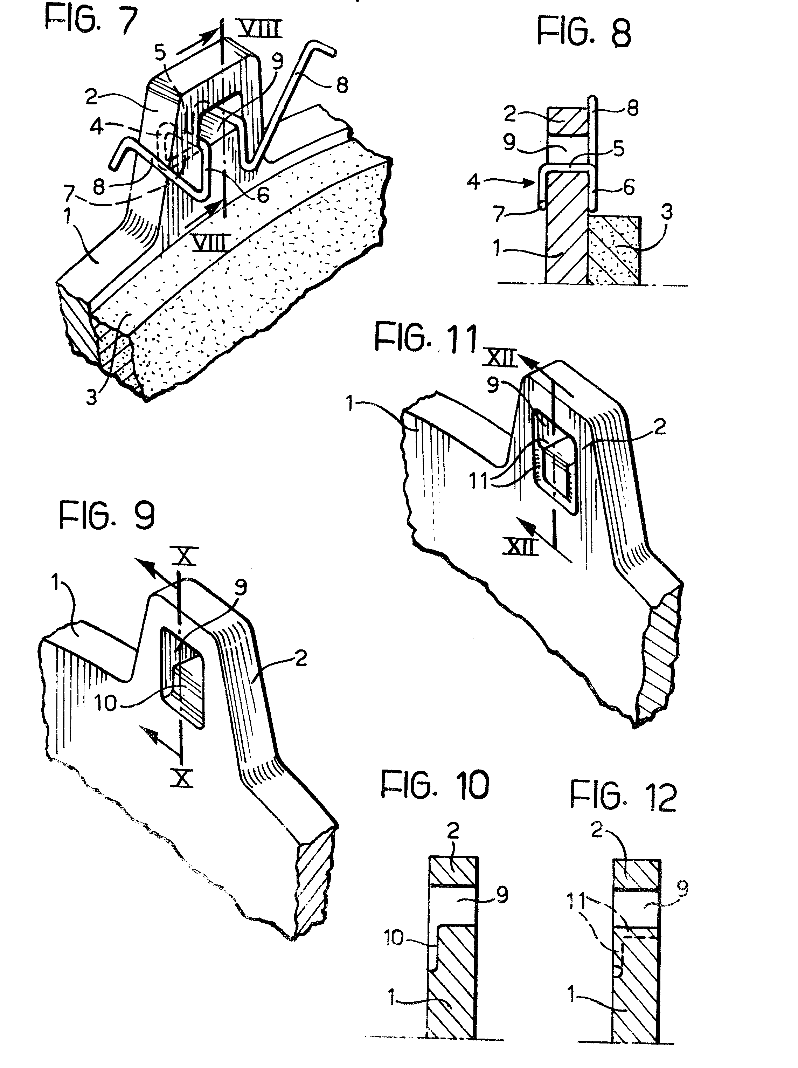

In the variant illustrated in Figures 5 and 6, the parts 4 and 5 of the spring rest on respective rebated portions 2a, 2b of the rear face and the upper face of the projection 2.

In the variant illustrated in Figures 7 and 8, the attachment part of a hold-down spring, which is similar to that illustrated in Figure 1 but has shorter vertical portions 6, engages the lower surface of a substantially quadrilateral aperture 9 formed in the projection 2 by means of the horizontal portions 5 and the front and rear faces respectively of the projection 2 below the aperture by means of the vertical portions 6 and 4.

As illustrated in Figures 9 and 10, the rear face of the projection below the aperture 9 is rebated, as indicated by 10, to locate and house the spring.

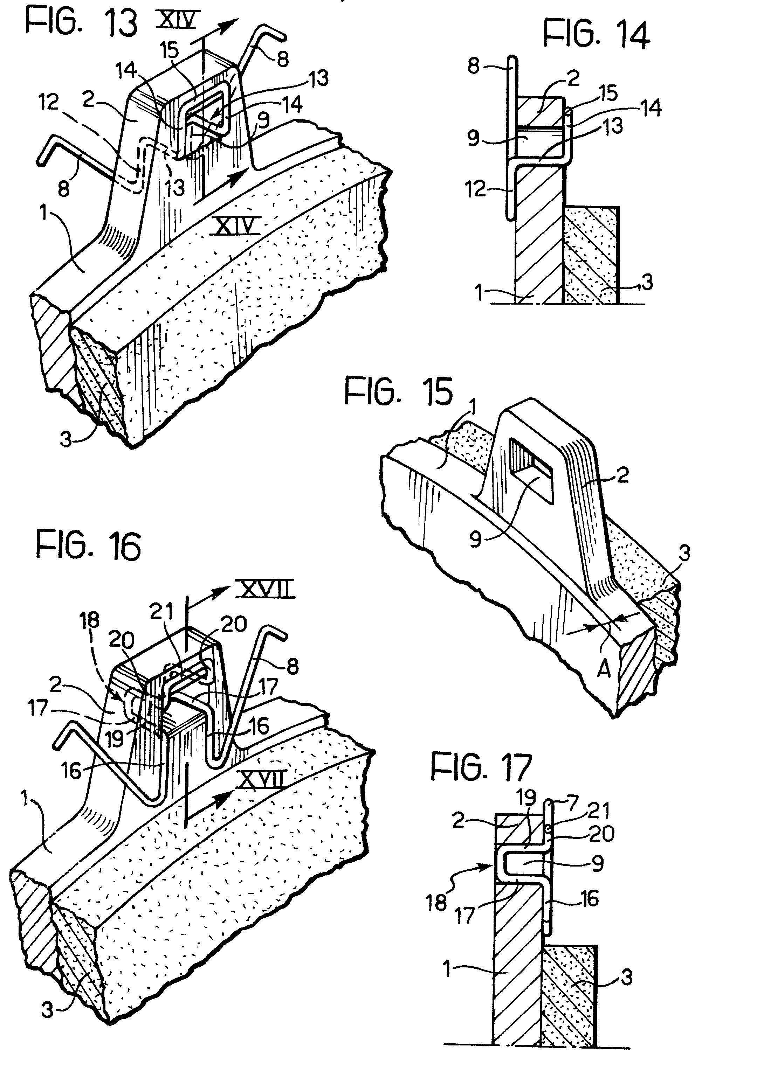

In the variant illustrated in Figures 11 and 12, the lower surface of the aperture 9 and the rear face of the projection 2 below the aperture 9 have grooves 11 for locating the spring.

In the variant illustrated in Figures 13 and 14, the attachment part of the spring comprises two Z-shaped parallel structures 12, 13, 14 connected together by a cross member 15. The horizontal portions 13 of the structure rest on the bottom of a rectangular aperture 9 formed in the projection 2, the cross member 15 rests on the front face of the projection 2 above the aperture 9, and the vertical portions 12 rest on the rear face of the projection 2 below the aperture 9.

As illustrated in Figure 15, the rear face of the projection 2 is set back relative to the rear face of the metal plate 1 by an amount A equal to the thickness of the wire of the spring, so as to prevent the vertical portions 12 projecting from the rear face of the metal plate 1.

In the variant illustrated in Figures 16 and 17, the attachment part of the spring comprises two omega-shaped structures, each indicated 16, 17, 18, 19 and 20, connected together by a cross member 21.

The horizontal portions 17 and 19 respectively engage the lower and upper surfaces of a substantially rectangular aperture 9 formed in the projection 2, and the two vertical end portions 16 and 20 respectively engage the front face of the projection 2 beneath the aperture 9 and the front face of the projection 2 above the aperture.

- 8 -

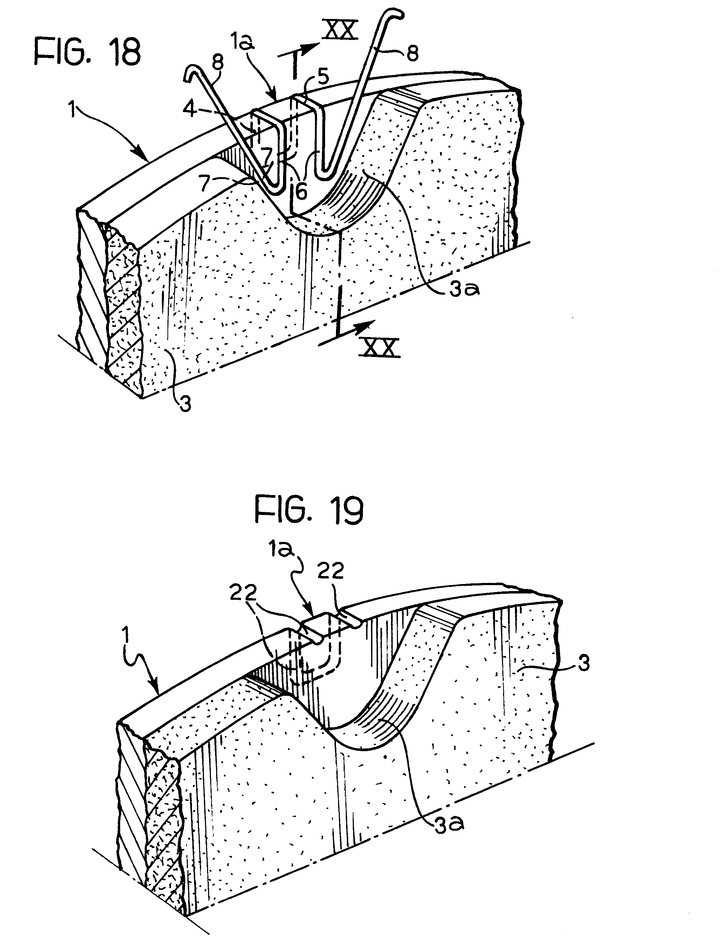

In the embodiment illustrated in Figures 18, 19 and 20, the pad 3 of the metal backing plate 1 has a notch 3a in correspondence with the central zone 1a of the upper edge of the plate 1 which in this case lacks the central projection 2 present in all the embodiments described previously.

A spring having a saddle-shaped attachment part 4, 5, 6, 7 corresponding to that described with reference to Figure 1 is attached by form coupling to the zone 1a. In this case, the notch 3a has a depth such as to allow the engagement of the spring in a zone of the upper edge of the plate 1 which does not project from the remaining part. If a notch of more limited depth is adopted, a central projection could still be used, but having a much smaller height than that previously necessary, a saving of material for the metal backing being achieved in each case with a reduction in the bulk of the friction pad assembly and a consequent reduction in the dimensions of the brake caliper, which can may thus be more compact.

For location of the spring, the plate 1 has grooves 22 formed by coining in its upper face and its rear face to receive the vertical portions 4 and the cross member 7 of the attachment part.

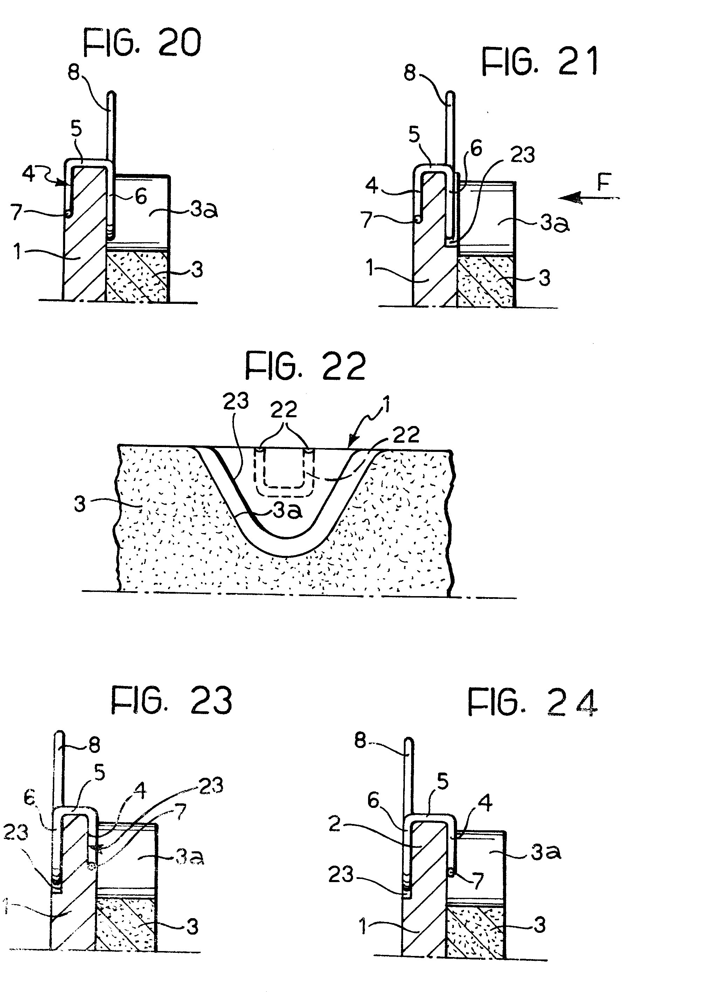

In the variant illustrated in Figures 21 and 22, the front face of the plate 1, that is the face facing the friction material 3, has a rebated zone 23 formed by milling, for receiving the vertical portions 6 and parts of the sprung arms 8.

In the variant illustrated in Figure 23, the milling is carried out on the rear face of the plate 1 which is provided with the groove 22 in its front face. In this variant, the spring is mounted on the plate in a position turned through 180° relative to that illustrated in Figures 18 to 22. The groove 22 may even be omitted under these conditions, as illustrated in Figure 24, so that the projection of the vertical arms 4 from the front face of the plate does not cause problems in use.

CLAIMS

1. Friction pad assembly for vehicle disc brakes, comprising a backing plate, a pad of friction material fixed to the backing plate, and hold-down spring means formed from wire and supported centrally by the backing plate, the spring means comprising two sprung arms extending outwardly from an attachment part for releasably connecting the spring means to the backing plate, characterised in that the attachment part of the spring means is shaped so as to engage a central zone of the upper edge of the metal plate (1) solely in correspondence with the front and rear faces of the plate and at least one horizontal surface of the plate which is perpendicular to the front and rear faces.

2. Friction pad assembly according to Claim 2, characterised in that the attachment part of the spring means comprises:
- two open structures which are parallel to each other and are each constituted by at least three mutually-perpendicular straight portions (4, 5, 6; 12, 13, 14; 16, 17, 18, 19, 20) lying in a vertical plane, the straight end portions being directed vertically and engaging the main faces of the metal plate (1) and the intermediate portions engaging the horizontal face or faces of the plate, and
- a cross member (7; 15; 21) connecting a first end of each structure to the corresponding first end of the other structure and bearing on one of the main faces of the backing plate,
and in that the two sprung arms (8) extend outwardly of the second ends of the two structures and are partly adjacent one of the main faces of the backing plate (1).

- 11 -

3. Friction pad assembly according to Claim 2, characterised in that each of the two open structures (4, 5, 6) is C-shaped and in that the attachment portion has an asymmetric saddle shape.

4. Friction pad assembly according to Claim 3, characterised in that the attachment part engages the upper face, the front face and the rear face of a central projection (2) on the upper edge of the metal plate (1).

5. Friction pad assembly according to Claim 4, characterised in that the projection has seats for locating the attachment part of the spring and for preventing the latter from projecting from the rear face of the metal plate.

6. Friction pad assembly according to Claim 5, characterised in that the seats are constituted by grooves (9) formed by coining in the upper and rear faces of the central projection (2).

7. Friction pad assembly according to Claim 5, characterised in that the seats are constituted by rebated portions (2a, 2b) of the upper and rear faces of the central projection (2).

8. Friction pad assembly according to Claim 3, characterised in that each of the C-shaped open structures (4, 5, 6) includes an intermediate horizontal portion (4) which engages the lower surface of a substantially quadrilateral aperture (9) formed in a central projection (2) on the upper edge of the metal plate (1) and two vertical end portions (6, 4) which

- 12 -

engage respectively the front face and the rear face of the projection (2) below the aperture (9).

9. Friction pad assembly according to Claim 8, characterised in that the rear face (10) of the central projection (2) below the aperture (9) is rebated to locate and house the portion of the attachment portion which engages the face.

10. Friction pad assembly according to Claim 6, characterised in that the lower surface of the aperture (9) and the rear face of the central projection (2) have grooves (11) for locating the attachment part.

11. Friction pad assembly according to Claim 2, characterised in that each of the two open structures (12, 13, 14) is Z-shaped and includes an intermediate horizontal portion (13) which engages the bottom of a substantially rectangular aperture (9) formed in a central projection (2) on the edge of the metal plate (1), and two vertical end portions (12, 14) which respectively engage the front face of the projection (2) above the aperture (9) and the rear face of the projection (2) below the aperture (9).

12. Friction pad assembly according to Claim 10, characterised in that the rear face of the central projection (2) is set back relative to the rear face of the metal plate (1) by an amount(A) equal to the thickness of the wire constituting the spring.

13. Friction pad assembly according to Claim 2, characterised in each of the two open structures (4, 5, 6) is omega-shaped and includes a loop (17, 18, 19)

- 13 -

which engages the upper and lower surfaces of a substantially rectangular aperture (9) formed in a central projection (2) on the edge of the metal plate (1), and two straight end portions (20, 16) which engage the front face of the projection (2), one above and the other below the aperture (9).

14. Friction pad assembly according to Claim 3, characterised in that the pad (3) of friction material has a notch (3a) in correspondence with the upper central zone of the metal backing plate (1), the notch having dimensions such as to leave part of the front face of the backing plate (1) uncovered, and in that the attachment part of the spring engages a zone (1a) of the edge of the plate (1) which does not project substantially from the remaining part of the edge.

15. Friction pad assembly according to Claim 13, characterised in that the metal backing plate (1) has seats (22) for locating the attachment part, the seats being formed by coining and/or milling of the plate (1).

0180555

FIG. 1

FIG.2

FIG. 5

FIG. 3

FIG. 4

FIG. 6

2/5

0180555

FIG. 7

FIG. 8

FIG. 11

FIG. 9

FIG. 10

FIG. 12

FIG. 13

FIG. 14

FIG. 15

FIG. 16

FIG. 17

FIG. 18

FIG. 19

FIG. 20

FIG. 21

FIG. 22

FIG. 23

FIG. 24